# EUROPEAN PATENT SPECIFICATION

(11) **EP 2 027 676 B1**
(45) Date of publication and mention of the grant of the patent: **21.08.2013**
(21) Application number: 07736437.0
(22) Date of filing: 10.06.2007
(51) Int. Cl.: H04L 12/705, H04L 12/707, H04L 12/46

(54) **Technique for providing interconnection between communication networks**
Technik zur Bereitstellung einer Verbindung zwischen Kommunikationsnetzen
Technique d'interconnexion entre réseaux de communication

(30) Priority: 15.06.2006 IL 17633006
(43) Date of publication of application: 25.02.2009
(73) Proprietor: ECI Telecom Ltd., Petach-Tikva 49517 (IL)
(72) Inventor: NAKASH, Shell, 44627 Kfar-Sava (IL)
(74) Representative: Modiano, Micaela Nadia
(86) International application number: PCT/IL2007/000697
(87) International publication number: WO 2007/144870

(56) References cited:
- US-A1- 2006 047 851
- US-A1- 2007 008 982
- KOMPELLA K ET AL: "Virtual Private LAN Service" IETF STANDARD-WORKING-DRAFT, INTERNET ENGINEERING TASK FORCE, IETF, CH, vol. l2vpn, no. 6, 28 December 2005 (2005-12-28), XP015043823 ISSN: 0000-0004
- ALCATEL: "Resilient Inter-Metro Hierarchical VPLS" APPLICATION NOTE, [Online] October 2004 (2004-10), pages 1-8, XP002451661 Retrieved from the Internet: URL:http://www1.alcatel-lucent.com/doctype s/opgapplicationbrochure/pdf/Resilient_HVP LS_an.pdf> [retrieved on 2007-09-18] cited in the application
- MARC LASSERRE L2VPN WORKING GROUP VACH KOMPELLA (EDITORS): "Virtual Private LAN Services over MPLS" IETF STANDARD-WORKING-DRAFT, INTERNET ENGINEERING TASK FORCE, IETF, CH, vol. l2vpn, no. 8, November 2005 (2005-11), XP015042479 ISSN: 0000-0004 cited in the application

## Description

### Field of the invention

The invention relates to a technique for interconnecting communication networks, more particularly for providing a traffic protecting though loop free interconnection between layer 2 Ethernet and/or VPLS- packet networks.

### Background of the invention

An Ethernet network is composed of Ethernet switches connecting local area network (LAN) or IEEE 802.1Q virtual LAN (VLAN) segments containing end stations. A switch forwards packets between its interfaces (ports) based on media access control (MAC) destination address contained in each packet. An incoming packet may be forwarded to one or more outgoing ports, where the latter case is referred to as multicasting or broadcasting.

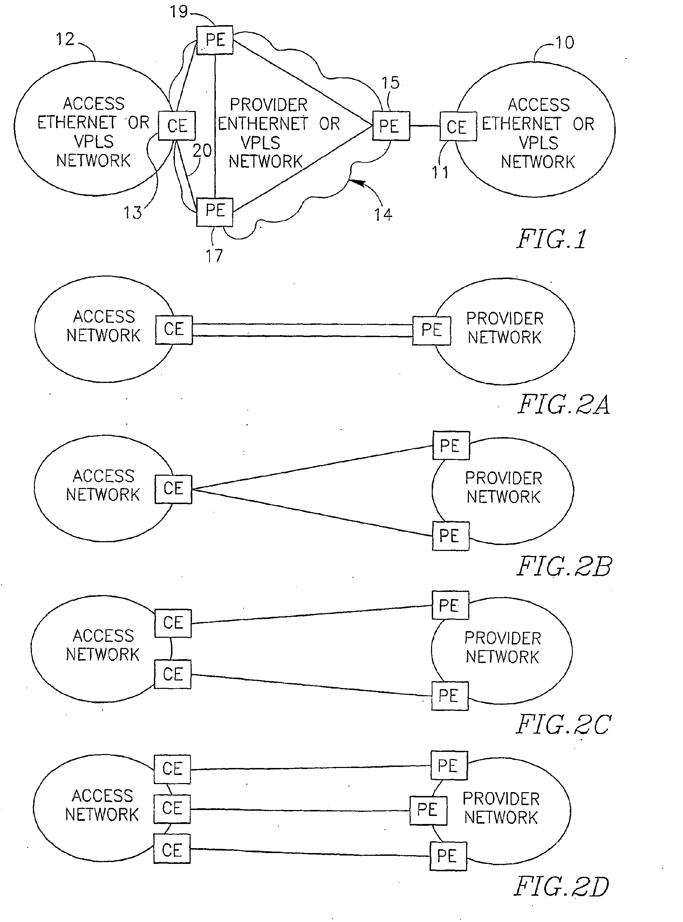

**Fig. 1** illustrates one possible example of inter-network connectivity where a customer access network (10 or 12) is connected to a provider network (14) via switches referred to as gateway customer edge (CE) switches (11 or 13) and gateway provider edge **(PE)** switches 15 or 17, 19, respectively. The term gateway indicates that the node belongs to one network and has connection to another network.

The CE-PE connection can carry Ethernet or Ethernet-VLAN packets. The provider may map the customer traffic into **Provider Service VLANs (SVLANs)** using VLAN stacking techniques (so called Q-in-Q encapsulation) in order to partition customer's traffic from the others.

A newly emerging technology has become known in the prior art, called virtual private LAN service (VPLS). A VPLS network emulates the functionality of a LAN, making it possible to interconnect multiple access networks over a VPLS network while all these access networks together behave as one single LAN or virtual LAN (VLAN). With VPLS, all these access networks would be assigned the same virtual private network **(VPN)** identification, this is analogous to assigning them the same SVLAN in an Ethernet-based provider network. With VPLS, the Ethernet packets arriving from the access network are appended with multi-protocol label switching (MPLS) headers, based on which they are forwarded across the provider network towards the remote LAN segments. This use of MPLS forwarding within the VPLS provider network allows to build networks that excel in performance, quality of service (QoS) for service differentiation, high resiliency (particularly fast rerouting, FRR), and scalability.

For convenience, we will refer to both SVLANs and VPLS VPNs used within the provider network as VPNs (Virtual Private Networks). VPLS architecture implements full-mesh connectivity between the PE nodes that connect the customer access networks, this allows each access network to communicate with any other access network belonging to the same VPN. Each PE-PE path carrying VPN traffic is called pseudo-wire (PW).

As an alternative to using Ethernet-VLAN on a CE-PE connection to classify customer traffic to specific VPN, a CE-PE connection *(say, 20)* can be a so-called **spoke Pseudowire (spoke PW).** With this method, known as hierarchical VPLS (H-**VPLS),** Ethernet packets already arrive encapsulated with MPLS headers (a.k.a., Martini encapsulation) on the CE-PE connection to the provider network. H-VPLS can be preferred over Ethernet-VLAN on the CE-PE connection, because it provides the aforementioned MPLS advantages also on the CE-PE connection and not only within the provider network.

A key aspect in Ethernet networks is avoiding **layer 2 loops.** A layer 2 loop occurs when multiple data routes exist between two end stations connected to an Ethernet network. A multicast or broadcast traffic introduced into Ethernet network with a layer 2 loop, will indefinitely keep circulating in the network, and might steadily consume more and more resources until the network overloads. Assuring loop-free topology is therefore essential to proper operation of Ethernet networks.

An important feature in packet-based applications is effective redundancy. The financial costs associated with unexpected downtime is leading service providers to build fault-tolerant networks. One option for achieving fault tolerant connectivity comes in the form of so-called **dual homing** or dual homing configurations. Dual homing adds reliability by allowing a device or a network to be connected to another device or network via two connections, such that when one connection fails the other one serves for carrying the traffic. The general case of dual homing is referred to as multi homing, with which redundancy is achieved via multiple rather than only two connections. This application mainly deals with dual homing for the sake of clarity, but it can be extended straightforwardly to support multi homing. Therefore, the term dual homing should be understood as "at least dual homing", i.e. as a network interconnection configuration providing two or more alternative traffic paths therebetween.

**Fig. 2** shows various dual-homing connections of an access network to a provider network:
**Case (a)** illustrates a dual homing configuration (dual homing) from a single CE to a single PE, thereby providing protection against CE-PE connection failure.
**Case (b)** illustrates a dual homing from a single CE to two PEs (or, alternatively, from a single PE to two CEs), thereby providing protection against failure of a CE-PE link, as well as against failure of a PE (or, alternatively, CE).
**Case (c)** illustrates dual homing from two CEs to two PEs, thereby providing protection against CE-PE, CE, and PE failure. This case is referred to as offering full **redundancy** since the traffic can flow between the two networks if CE or PE or CE-PE connection fails. Full redundancy is often preferred over partial redundancy as it can support fail-safe operation of the applications in the event of single failure (multiple simultaneous failures - e.g., both CEs or both PEs - are more scarce).
**Case (d)** illustrates a fully-redundant multi-homing configuration actually being a triple-homing one. This case offers more robust connectivity than dual-homing at the cost of another CE-PE connection and possibly more complicated means for regulating the traffic between the networks

A major concern in dual homing is avoiding the unbroken layer 2 loop that is created by the dual (or multi) homed connections, i.e., connections having two or more communication lines between the two networks. Breaking this loop can be done in various ways, that can be classified to two approaches:
(A) Running signaling protocol, dedicatedly designed for this purpose, among the involved switches. The standard protocol designed for this purpose is the Spanning Tree Protocol **(STP)** that is defined in IEEE 802.1, including its variations such as RSTP (IEEE 802.1w) or MSTP (IEEE 802.1s), and all of them are referred hereby as xSTP. The xSTP algorithm calculates a logical tree that spans all of the switches in a network, forcing redundant paths into a blocked state, and leaving only one active path at a time between any two end stations. In case a network path becomes unavailable, the spanning tree algorithm can recalculate a new tree and then reactivate blocked paths to enable the connectivity between any two end stations.
   A notable advantage of xSTP is that it can break a loop for any arbitrary Ethernet topology. A drawback of this method is the need to maintain xSTP signaling interaction between the switches. This is especially complicated when the dual homing connectivity is created between two networks running under different administrations, due to the xSTP provisioning and maintenance burden it inflicts upon the parties involved.
   This prior art, described in http://www.alcatel.com/doctypes/ opgapplicationbrochure/pdf/Resilient_HVPLS_an.pdf (hereby referred to as *"Alcatel's"*), requires that xSTP would run among CEs and PEs (see our Figure 2) to break the loop. Note that the provider would have to run a separate xSTP instance with each access network. This could be especially undesired when the connecting parties are VPLS networks that use H-VPLS on the CE-PE connection.
(B) Forcing one of the dual homing connections to a standby mode, during which it does not actively carry traffic. This prior art, described in section 10.2.1 of draft-ietf-12vpn-vpls-ldp-08.txt, assumes that the dual homed connections originate at a single CE (or a single PE). A notable advantage of this method is its simplicity as it does not mandate signaling between the switches for achieving loop-free topology. This configuration also enables quite fast recovery time (sub-50 milliseconds). A drawback of this method is that it does not support full-redundancy as shown in Figure 2 (c). US 2006/0047851 (Further referred as *"Cisco's* ") proposes a method in which a local node u-PE (analogous to the left-side CE in Figure 1 of the present application) is dual homed to two local nodes Agg-PEs (analogous to the left-side two PEs in Figure 1 of the current application) and can communicate with remote nodes u-PE (analogous to right-side CE in Figure 1 of the present application) in a loop-free manner, wherein all of the involved local/remote u-PEs and Agg-PEs run together a protocol xSTP in order to break the layer 2 loop. The method of US 2006/0047851 is rather complicated because (a) it uses xSTP protocol to assure the loop-free communication; (b) it requires (xSTP) signaling interaction between the u-PE and Agg-PE; (c) the (xSTP) signaling is not a local matter on the border of the two connected networks, since it involves both the local and remote u-PEs and Agg-PEs. Internet draft draft-ietf-l2upn-upls-bgp-06 discloses a Virtual Private LAN Service in which a loop-tree topology is constructed by BGP path selection.

### Object of the invention

The object of the present invention is providing a simple technique for connecting Ethernet and/or VPLS networks, that would be capable of preventing traffic loops at layer 2, combine advantages of the above-mentioned two prior art approaches, while avoiding their drawbacks.

### Summary of the invention

The Inventor has found that the above object can be achieved by a method according to claim 1.

According to a second aspect of the invention, there is provided a software product as in claim 7.

According to a third aspect of the invention, there is also provided a peer element according to claim 8.

Coming back to the above-proposed method, it should firstly be noted that it enables drastically simplifying the problem of interconnecting Ethernet and/or VPLS networks. No xSTP is required neither in the first network (say, an access network) nor in the second network (say, a provider network) for correct operation of the dual homing, and that is in contrast with the prior art approach (A) which requires xSTP at one or both of the connecting networks.

The above method renders the configuration fast protected and simple simultaneously. Those skilled in the art understand the term "fast protected" as being capable of performing switchover to its protection traffic line during a time period, which is much shorter than that could be ensured by previously known techniques.

For example, such a prior technique is RSTP protocol activated in a relatively large network such as an access network having multiple nodes. According to the proposed method, the time of the dual homing switchover can be of about 0.1 sec, i.e., much less than 1-2 sec provided by using a standard RSTP technology.

On the other hand, though the proposed method is comparable by its switchover time with a method where a separate xSTP protocol is activated per dual homed connection (as described in *Alcatel's*)*,* it is much simpler than the *Alcatel's* technique since the proposed method does not require applying xSTP protocol for each multi/dual-homing configuration in the provider's network.

In comparison with the US 2006/0047851 (*Cisco's*)*,* the proposed invention avoids drawbacks of the *Cisco's,* by: (a) using rather simple signaling (such as Hello signaling) eliminating the need for xSTP (b) avoiding signaling interaction between the CE and PEs (c) exchanging the Hello signaling only between the two PEs (peers) to which the CE is dual homed.

Let us assume as a condition, that both the access network and the provider network are a-priory loop-free, i.e., in the frame of the present application we do not take care of removing traffic loops pre-existing in any of the networks before they are interconnected by the dual-homing configuration. The task of the invention is to prevent loops which may be introduced/caused by the dual-homing connection.

As has been mentioned, the first of the mentioned networks can be an access (customer's) network, and the second network - a provider network. However, it can be just vise versa, it can also be that the two mentioned networks have nothing in common with an access and provider's network. Each of the two networks can be a network utilizing raw Ethernet traffic, Ethernet VLAN traffic or encapsulated Ethernet traffic, Martini encapsulation inclusive. In particular, each of them can be an Ethernet network or a VPLS network.

The mentioned at least three elements of the dual-homing (or multi-homing) configuration are preferably edge nodes or gateways of the two connected networks. Preferably, for a case when one of the networks is an access (customer) network and the other is a provider network, each of the elements is either a Customer's Edge node (CE) or a Provider's Edge node (PE). Further, said at least two elements belonging to one and the same (second) network - let them be called peer elements - will be either PE-s belonging to a provider network, or CE-s belonging to a customer's (access) network.

Usually, the peer elements are gateway PEs. (Keeping in mind that the term gateway indicates that the node belongs to one network and has connection to another network.)

It is understood, that said two or more elements belonging to one and the same network (the peer elements) form the basis of the required protected interconnection (i.e., the basis of multiple alternative communication lines). Therefore, each of these two or more elements must be prepared (provisioned) to receive and forward traffic from the second network to the first network and vice versa.

Let, for example, a loop-free access network is "dual homed" to a provider network. Let the dual homing configuration comprises two PE-s belonging to the provider network, and a single CE belonging to the access network. The configuration comprises two CE-PE traffic lines, and only one of them is supposed to be active at a time. From the access network's point of view, the provider network emulates the functionality of a LAN. Traffic over an active CE-PE connection is raw Ethernet or Ethernet-VLAN (either customer VLAN or SVLAN) or encapsulated Ethernet such as H-VPLS spoke PW. In order for the dual homing to operate correctly, at both gateway PEs there is provisioned the VPN (Virtual Private Network) assigned for the customer traffic.

Further preferably, for organizing the bi-directional signaling, the method comprises provisioning a bi-directional virtual link (VL) between each pair of said two or more peer elements belonging to the second network, and ensuring exchange of signaling messages between said peer elements pairwise. Preferably, the VL is dedicated for the signaling traffic.

The VL may be implemented by a dedicated provider S-VLAN or PW, or even by a physical link, as long as it assures that the signaling messages for the dual homing connection are exchanged between these two PEs.

To increase the VL reliability and assure low message delivery delay, the VL - or the means that are used to carry the signaling traffic, e.g., MPLS tunnels - may be protected (e.g., with MPLS fast rerouting mechanism-FRR) against failure of an intermediate node or links along the VL, use the shortest path available between the two PEs, have high traffic priority and/or packet error detection/protection means.

Specifically, the method may comprise prioritizing the signaling traffic over other traffic transmitted via the VL (if such other traffic is at all conveyed via the VL).

For establishing and maintaining the bi-directional signaling, the peer elements preferably should exchange periodic signaling messages (referred hereby as "Hello" messages) over the VL. The Hello messages may be implemented with standard or modified standard means, e.g. Ethernet or MPLS or PW Operations Administration and Maintenance (OAM) messaging, such as those described in ITU-TY.1710 and Y.1711.

Yet further preferable, that the above messages serve to elect the peer element which should be a "designated forwarder" in the dual-homing configuration.

The Inventor proposes the following way of performing the step of establishing the bi-directional signaling and the step of making the decisions:
a) periodically exchanging the signaling messages (Hellos) between peer elements (say, between PEs over the VL), while introducing in said Hellos information on status of the communication line associated with respective PEs, and on the hierarchical status of said PEs.
b) based on the information received with the aid of said Hellos, electing one of the peer elements (PEs) to be Designated (i.e., designated to forward the traffic over its CE-PE connection), while blocking all the remaining (in a particular case of dual homing, the second one) of the traffic lines.
c) transmitting traffic between the networks via the elected PE (and its corresponding traffic line) of the dual homing configuration.

According to the proposed concept, only one of the peer elements (say, PEs) is elected to be the designated PE (D-PE) at a time. The peers "agree" which one of them is the elected D-PE, this is indicated in the Hello messages. Only the D-PE puts its traffic line (CE-PE connection) in the forwarding state, i.e. it does receive and transmit packets through the connection, while the non-designated PE (N-PE) blocks its CE-PE connection, i.e. it does not send nor receive any packet on the connection. The blocking can also be implemented by deactivating the physical link between the PE and CE, or by putting the residing spoke PWs in standby state. It should be emphasized that, in the present patent application, blocking of a traffic line means that the line does not send nor receive any traffic on its CE-PE connection, unlike xSTP protocols where blocking still allows receiving BPDU packets.

Specific solutions of how the hierarchical status of the particular peer element can be reflected in the Hello messages, and how the status of the suitable traffic line can be introduced in the Hello messages sent from the particular PE will be described below with reference to the attached drawings.

The hierarchical function of the peer (D-PE or N-PE) can be re-elected during the operation, based on the mentioned information, which can be obtained using the Hello messages.

Re-election of the Designated element (say, D-PE) and consequently, re-election of the forwarding traffic line can be performed, for example, according to the following possible version of the sub-step (b): upon missing at a non-elected peer element N-PE a predetermined number of Hello messages from the D-PE, or upon receiving a defect indication (DI) from the D-PE, the N-PE becomes a D-PE itself; the new D-PE puts its associated traffic line (CE-PE connection) into a forwarding state.

It should be noted, that decisions on status change of a peer element should be regulated by a logical mechanism (for example, by a logical state machine) where various events affecting such decisions are prioritized to prevent racing (say, electing two D-PEs) and mis-election (e.g., no D-PE elected) in the absence of failures or the presence of up to one traffic line failure and/or up to one VL direction failure.

More information on the re-election procedure will be disclosed in the detailed description.

The new D-PE then optionally (and preferably) flushes the forwarding databases (comprising the previously learned Media Access Control addresses or MAC addresses) of the affected VPNs and initiates a MAC flushing message per VPN, ordering this flushing to all the provider nodes where these VPNs were provisioned, to facilitate transition of the traffic, outgoing from the provider to the access network, to the new CE-PE connection. This flush message can use standard means, like the one proposed in ietf-draft-12vpn-ldp-08.txt.

The new D-PE optionally (and preferably) triggers corresponding MAC flushing in the access network as well, to facilitate transition of the traffic, arriving from the access to the provider network, to the new CE-PE connection. This flushing can be triggered by either of the following (1) Reactivating the physical link towards the CE (2) In case of H-VPLS CE-PE connection, reactivation of the former standby spoke PWs towards the CE (3) Re-enabling the sending and receiving traffic through the interface (4) In case the access network runs xSTP, the new D-PE may send an xSTP topology change notification (TCN) to the CE (5) Sending MAC flushing message to the CE. In the absence of MAC flush messages, the traffic would anyway be transitioned to the new CE-PE based on the following ordinary layer 2 Ethernet switching means: (1) MAC address aging (2) MAC address re-learning.

It should be emphasized that, in the proposed technique, only the peer elements (usually, two PEs attached to the CEs) need to participate in the Hello messaging, because the customer traffic is 'terminated' there, meaning that these two peer PEs apply MAC address lookup onto an arriving customer packet in order to find out where the packet should go. In other known techniques (for example, Alcatel's), the signaling for dual homing connection is much more extensive - xSTP, contrary to the proposed simple Hello messages, is run among all the CEs and PEs involved (two CEs and two PEs.) The proposed Hello mechanism eliminates signaling interaction between the access and provider networks (xSTP inclusive) required by most of the prior art references to assure a loop-free inter-network connectivity. In fact, both networks need not run xSTP at all, as may be desired when the networks involved are VPLS networks. Moreover, simplicity of the Hello mechanism and its being exchanged between only the peer (usually, two provider) nodes allows switchover times much faster than those of prior art, typically 100-200 ms compared to 1-2 seconds with standard RSTP.

When speaking about the switchover time, it should be noted that in case the VL is protected (say with FRR), it should recover faster than the dual homing configuration decides about switchover due to missing a predetermined number of Hellos at one of the peer elements. In other words, the time it takes to miss the predefined number of Hellos should be larger than the recovery time for a failure in the VL path (e.g., 200 ms compared to 50 ms), in order to avoid an unnecessary switch to a new PE while the VL is recovering.

The invention will be described in additional details as the description proceeds.

### Brief description of the drawings

The invention will further be described with references to the following nonlimiting drawings, in which:
Fig. 1 illustrates an example of two access networks interconnected via a provider network through gateway nodes.
**Figs. 2a, 2b, 2c, 2d** illustrate various embodiments of a dual homing configuration and a multi-homing configuration.
**Figs. 3a, 3b, 3c, 3d, 3e, 3f, 3g, 3h** illustrate three exemplary scenarios of operation of one specific dual homing configuration.
Fig. 4 illustrates a simplified block diagram of a state machine of a particular peer element in the proposed dual homing configuration.

### Detailed description of the preferred embodiments

**Figs 1** and **2** have been described in the background of the invention.

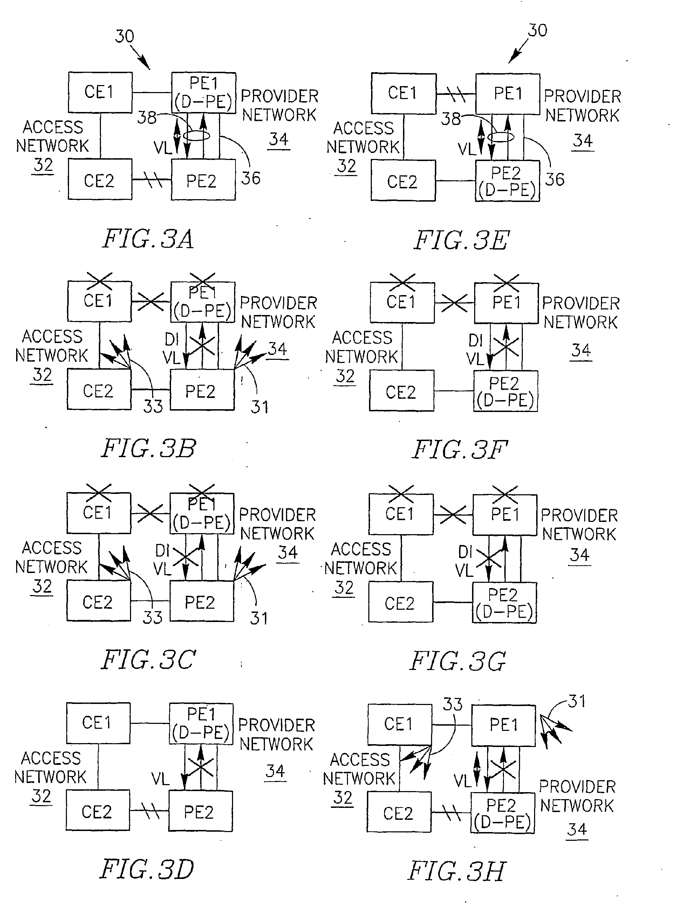

**Fig. 3a** schematically illustrates a steady-state operation of an exemplary dual-homing configuration 30 connecting an access Ethernet-based network 32 to a provider Ethernet-based or VPLS network 34 via edge customer nodes CE1, CE2 and edge provider nodes (let them be called peer nodes) PE1, PE2, where CE1 (CE2) is directly connected to PE1 (PE2) via a physical link or spoke PW. PE1 and PE2 may also be connected for the purpose of exchanging customer traffic (in case of a VPLS provider network, there is a PW 36 per VPN between PE1 and PE2). The nodes CE1, CE2 in the access network 32 are connected via a traffic line within the access network, to visualize that if both CE-PE connections are forwarding, then a layer 2 loop will occur in the access network which might not be running xSTP (as is typically the case if the access network is a VPLS network). In such cases the technique proposed by the Inventor is most advantageous. To implement the inventive technique, a bi-directional virtual link VL (38) is established between the nodes PE1 and PE2 for the purpose of Hello signaling.

It is to be noted that the proposed multi-homing configuration (the dual-homing one 30 in this case) is provisioned per each specific access network to be connected to another (say, provider) network, and the suitable procedures (which will be described below) should be implemented per each multi-homing configuration.

The configuration 30 in Fig. 3a is presently failure-free. It is also loop-free, since the node PE1 is elected to be a designated or forwarding node (D-PE), the node PE2 thus remains to be a non-elected node (N-PE) and therefore a traffic line CE1-PE1 is active, while a traffic line CE2 - PE2 is blocked by the PE2 to avoid a loop. (The blocked line is marked with a double strip. It should be kept in mind that to avoid a layer 2 loop, only one of the CE-PE connections must be forwarding at a time).

For the configuration 30 to work loop-free, at least one CE-PE connection and at least one direction of the VL 38 must be operational, i.e. fault free. Therefore, the VL 38 is preferably protected (e.g., with MPLS FRR mechanism) against failure of an intermediate node or link along the VL, to increase its reliability. The VL is preferably implemented as a dedicated pseudo-wire (PW) in case of VPLS provider network. VL can even be a physical link, as long as the Hello signaling can be exchanged between the peer PEs.

The bi-directional VL 38 serves for periodically exchanging Hello messages (so-called Hellos) between the gateway PEs, to elect the designated forwarder (D-PE) as described below and thus to establish and maintain a loop-free dual homing.

The D-PE can be elected based on a dedicated or conventional identification sent in the Hello message and unambiguously identifying each peer (i.e., the two peers have different identifications so this can serve to elect the D-PE unambiguously). An example for a conventional identification could be the IP address of the PE being a router-switch where a D-PE could be selected based on having a higher (or a lower) IP address. The PEs establish an agreement regarding the elected D-PE, this agreement is suitably indicated in the Hello messages. In a rare case where the IP address of any of the peer elements is changed, the D-PE will be automatically re-elected. (Fig. 3e illustrates a case where PE2 is elected as D-PE in the configuration 30.)

**Figs. 3b, 3c, 3d, 3f, 3g, 3h** show how the proposed dual-homing configuration 30 will operate in cases of a single fault or multiple simultaneous faults within the configuration.

**Fig. 3b** illustrates a group of scenarios where the traffic line associated with the designated peer element (D-PE) fails due to failure of at least one of its components (marked with three crosses on CE1, CE1-PE1 connection and PE1 respectively). It is also possible that one direction of the VL 38 fails (marked with an additional cross). The status of the traffic line becomes known to the D-PE and is normally introduced in the Hello messages sent from the D-PE. When its associated CE-PE connection fails, the PE1 starts sending Hello messages provided with a defect indication (DI). (The PE1 would clear the DI from the Hello messages a predefined time after these failures are repaired). In case the D-PE itself fails, it stops sending Hello messages to the N-PE (PE2). When N-PE receives a DI over the VL or when it fails to receive a predefined number of consecutive Hellos from the D-PE, it becomes a D-PE itself and puts its CE2-PE2 connection into a forwarding state. The alternative connection CE1-PE1 is anyway non-operational, and thus the failure of the VL in the direction from PE2 to PE1 cannot keep PE1 as D-PE.

The new D-PE may optionally and preferably flush the forwarding databases (learned MAC addresses) of the affected VPNs of the access network and initiate a MAC flushing message per VPN ordering this flushing to all the provider nodes where these VPNs were provisioned. This operation is schematically illustrated by a batch of arrows 31. The new D-PE (PE2) may optionally and preferably trigger such MAC flushing (33) also in the access network, using one of the previously suggested methods (e.g., sending xSTP TCN or MAC flush message or by activating the standby spoke PW per VPN).

Fig. 3c illustrates a situation which differs from that in Fig. 3b in that the other direction of the VL optionally fails. This situation is simpler, since in any failure in the upper traffic line and/or the marked direction of the VL the result is the same - the lower traffic line will become the forwarding one. (Even in case a DI indication is not received at PE2 due to failure of PE1 or of the indicated VL direction, absence of a predetermined number of Hello messages at PE2 will make the job). When the VL failure is not accompanied with a failure in the D-PE or its CE-PE connection or its attached CE, the N-PE (PE2) will fail to receive PE1's Hellos and will assume the role of the D-PE. The former D-PE (PE1) will figure a disagreement on which one is the D-PE and hence become the N-PE.

**Fig. 3d** illustrates a situation where both CE-PE connections are operational and the virtual link fails in the direction to the D-PE. PE 1 thus remains D-PE as it does not receive Hellos from PE2.

**Fig. 3e** illustrates a situation which differs from that in Fig. 3a in that the PE2 is elected to be D-PE in the configuration 30, and the line CE1-PE1 is blocked.

**Fig. 3f** illustrates a situation which differs from that in Fig. 3b in that PE2 remains D-PE because it receives DI from the PE1 or does not receive PE1's Hellos.

**Fig. 3g** illustrates a situation which differs from that in Fig. 3c in that PE2 remains D-PE because it receives DI from the PE1 or does not receive PE1's Hellos.

**Fig. 3h** illustrates a situation which differs from that in Fig. 3d in that PE1 will become the D-PE because it does not receive PE2's Hellos, while PE2 will become N-PE because PE1 no longer agrees for PE2 to be the D-PE.

The above examples demonstrate that the proposed method and the suitable dual homing configuration are able to function correctly even if only one traffic line of the configuration is in order and/or only one direction of the virtual link VL is operational.

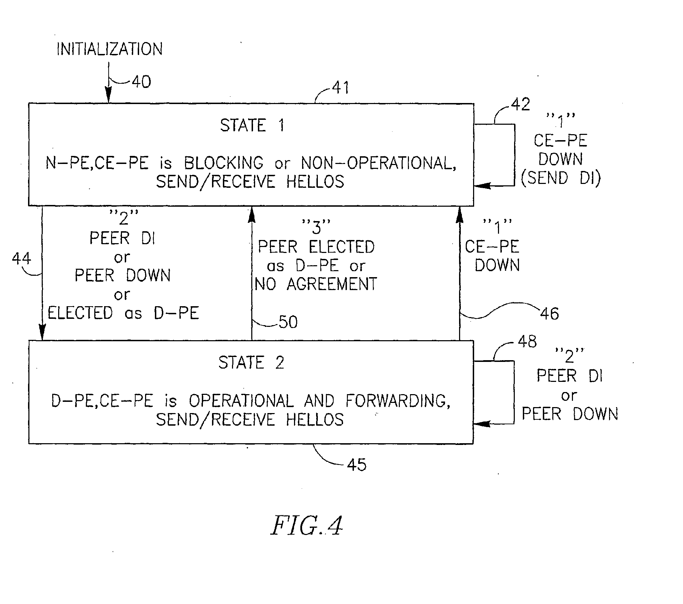

**Fig. 4** illustrates a simplified block diagram of a logical state machine of a particular peer element PE in the proposed dual homing configuration. Let us indicate the particular peer element as PE or "our PE". The PE can be in one of two states:
(*State I)* It is a non-designated peer N-PE and its associated connection CE-PE is either blocked or non-operational.
*(State II)* It is a designated peer D-PE.

In both states I and II (illustrated as boxes 41 and 45 respectively), the PE normally sends and receives Hellos over the virtual link. The PE must also detect faulty conditions of its own CE-PE connection. (Note that neither Hello messages, nor any alarms of faulty conditions such as "DI", "Peer Down" and "CE-PE down" are indicated themselves in the state diagram of Fig. 4)

Upon initialization (e.g., power up, arrow 40), our PE starts at state I (box 41). If its CE-PE is non-operational (i.e., faulty, down), that is considered the highest priority event "1". In response, the PE stays in this same state I and sends a defect indication DI in its Hellos. It is then ineligible to be a D-PE. While in State I, a PE sends Hellos, indicating itself as the N-PE. While in State I, in the absence of the highest priority event "1", if the PE receives information on the second priority event "2", it moves to state II (arrow 44), and optionally triggers MAC flushing in the provider and the access networks. The second priority event "2" is stated when our PE receives:
- a Hello with DI from its peer, or
- its peer is down (as detected by failing to receive a predefined number of Hellos at our PE), or
- our PE has been elected as D-PE.

State II (box 45) is characterized in that our PE puts its CE-PE connection in the forwarding state, and sends Hellos indicating itself as the designated peer D-PE.

When our PE is in state II, and its CE-PE connection fails, it is considered the highest priority event "1" and the PE returns to state I (arrow 46). Otherwise (in the absence of the highest priority event), if our PE receives information about events of priority "2" such as: DI from its peer in Hello messages, or its peer is down (detected by failing to receive a predefined number of Hellos from its peer), our PE stays in state II (arrow 48). In the absence of events of priorities "1" and "2" , our PE may receive infonnation on events of priority "3": its peer is elected as D-PE (as would be the case if the peer has, say, a higher IP address), or there is no agreement who is the D-PE (as would be the case 1if its peer does not receive Hellos and becomes a D-PE even if its IP address indicates it should be N-PE). In this case, our PE returns to state I (arrow 50). If none of the above-mentioned events takes place, our PE stays in state II.

It should be noted that exactly the same state diagram describes the behavior of the peer element of our PE, just when one of them is in state I, the second one would normally be in state II.

It should be appreciated that other modifications of the proposed multi-homing configurations can be proposed, other suitable versions of the method/software product can be developed and they are to be considered part of the invention. The invention is generally defined below by the following claims, and can be interpreted using the above description.

## Claims

1. A method for interconnecting a first network (12) and a second network (14) each being either layer 2 Ethernet-based or VPLS network, using a fully or partially redundant dual homing configuration including
at least three network elements where two of them are peer elements PEs (17, 19) belonging to the second network, at least one is a customer element CE (13) belonging to the first network, and
at least two traffic lines (20) respectively associated with said peer elements PEs and connecting said first and said second networks via said at least three network elements,
the method comprises:
- establishing non-xSTP bi-directional signaling only between said peer elements PEs belonging to the second network, by periodically exchanging signaling messages between only said peer elements PEs, while introducing in said signaling messages information concerning status of the traffic lines associated with respective peer elements and concerning state of said peer elements; thereby avoiding signaling interaction between the CE and the PEs and exchanging the signaling messages only between said two PEs to which the CE is dual homed;
- based on the information obtained from said signaling messages, deciding at one of said peer elements at a time, that only its associated traffic line should be forwarding traffic, by
electing one of the peer elements to be a designated peer element D-PE and its associated traffic line as designated for forwarding the traffic, while blocking all the remaining traffic lines from sending or receiving traffic on their CE-PE connection,
wherein the decision is performed at one of said peer elements using a logical state machine where each of said peer elements has two states, one being a designated, traffic
forwarding state (45) and the other being a non-designated, blocked state (41) and where each of said at least two peer elements is able to pass from one of its state to the other based on said information, provided that said information is classified into priority degrees;
and transmitting traffic between said networks only via the designated traffic line of the dual homing configuration.

2. The method according to Claim 1, wherein the step of establishing said bi-directional signaling between said peer elements is performed by ensuring a bi-directional virtual link VL between each pair of said peer elements, and providing exchange of said signaling messages between said peer elements pairwise.

3. The method according to Claim 1 or 2, wherein said first and second networks are both virtual private LAN service, VPLS, networks, and wherein said traffic lines are in the form of spoke pseudowire, PW, connections provided between said network elements.

4. The method according to Claim 2, further comprising prioritizing the bi-directional signaling messages over other traffic via said VL.

5. The method according to Claim 1, wherein, in the absence of failures in the dual homing configuration, the step of electing is based on unambiguous identification of said peer elements.

6. The method according to any one of Claims 1 to 5, comprising a step of reelecting another of said peer elements and its associated traffic line as being forwarding traffic.

7. A software product, comprising computer implementable instructions and/or data for carrying out the method according to any one of Claims 1 to 6 stored on an appropriate computer readable storage medium and suitable to be installed in a network element; the software product is adapted to enable operations of said method when used in the network element being a peer element (17, 19) in a fully or partially redundant dual homing configuration interconnecting a first network (12) and a second network (14)

8. A network element (17, 19) being part of a fully or partially redundant dual homing configuration interconnecting a first network (12) and a second network (14) and including at least three network elements where two of them are peer elements PEs (17, 19) belonging to the second network, at least one is a customer element CE (13) belonging to the first network, and
at least two traffic lines (20) respectively associated with said peer elements and connecting said first and said second networks via said at least three network elements,
said network element being one of said two peer elements PEs, adapted to implement the following steps in cooperation with another one of the two peer elements:
- establishing non-xSTP bi-directional signaling between only said two peer elements belonging to the second network, by periodically exchanging signaling messages between only said peer elements, while introducing in said signaling messages information concerning status of the traffic lines associated with respective peer elements and concerning state of said peer elements; by avoiding signaling interaction between the CE and the PEs and exchanging the signaling messages only between said two PEs to which the CE is dual homed;
- based on the information obtained from said signaling messages, deciding at one of said peer elements at a time, that only its associated traffic line should be forwarding traffic, by
electing one of the peer elements to be a designated peer element D-PE and its associated traffic line as designated for forwarding the traffic, while blocking all the remaining traffic lines from sending or receiving traffic on their CE-PE connection,
wherein the decision is performed at one of said peer elements using a logical state machine where each of said peer elements has two states, one being a designated, traffic
forwarding state (45) and the other being a non-designated, blocked state (41) and where each of said at least two peer elements is able to pass from one of its state to the other based on said information, provided that said information is classified into priority degrees;
and transmitting traffic between said networks only via the designated traffic line of the dual homing configuration.

## Patentansprüche

1. Ein Verfahren zum Verbinden eines ersten Netzwerks (12) und eines zweiten Netzwerks (14) miteinander, wobei beide entweder ein Layer 2 Ethernet-basiertes sind oder ein VPLS-Netzwerk sind, das eine vollständig oder teilweise redundante Dual-Homing-Konfiguration verwendet, die Folgendes einschließt:
mindestens drei Netzwerkelemente, wobei zwei von ihnen Peer-Elemente (peer elements, PEs) (17, 19) sind, die zu dem zweiten Netzwerk gehören, mindestens eines ein Kundenelement (customer element, CE) (13) ist, das zu dem ersten Netzwerk gehört, und
mindestens zwei Vekehrsleitungen (20), die jeweils mit den Peer-Elementen, PEs, verknüpft sind und das erste und zweite Netzwerk über die mindestens drei Netzwerkelemente verbinden; das Verfahren umfasst Folgendes:
- Errichtung bidirektionaler nicht-xSTP-Signalisierung nur zwischen den Peer-Elementen, PEs, die zu dem zweiten Netzwerk gehören, durch periodischen Austausch von Signalisierung-Nachrichten nur zwischen den Peer-Elementen, PEs, bei gleichzeitiger Einführung, in die Signalisierung-Nachrichten, von Informationen bezüglich des Status der Verkehrsleitungen, die mit entsprechenden Peer-Elementen verknüpft sind, und bezüglich des Status der Peer-Elemente, wodurch eine Signalisierung-Interaktion zwischen den CE und den PEs vermieden wird und wodurch die Signalisierung-Nachrichten nur zwischen den beiden PEs ausgetauscht werden, mit denen das CE in einem Dual-Homing Verhältnis steht,
- anhand der Informationen, die aus den Signalisierung-Nachrichten erhalten werden, Entscheiden, an einem der Peer-Elemente zu einer gegebenen Zeit, dass nur seine verknüpfte Verkehrsleitung Verkehr weiterleiten sollte, durch
Auswahl eines der Peer-Elemente als bestimmtes Peer-Element (designated peer element) D-PE, und seiner verknüpften Verkehrsleitung als bestimmt zur Weiterleitung des Verkehrs, bei gleichzeitiger Blockade aller übrigen Verkehrsleitungen gegen Senden oder Empfangen von Verkehr auf ihrer CE-PE-Verbindung, wobei die Entscheidung an einem der Peer-Elemente mit Hilfe einer logischen Zustandsmaschine getroffen wird, worin jedes der Peer-Elemente zwei Zustände hat, von denen einer ein bestimmter, Verkehr weiterleitender Zustand (45) ist und der andere ein nicht bestimmter, blockierter Zustand (41) ist, und worin jedes der mindestens zwei Peer-Elemente anhand dieser Information von einem seiner Zustände zum anderen übergehen kann, vorausgesetzt, dass die Informationen in Prioritätsgraden klassifiziert sind,
und Übertragung von Verkehr zwischen den Netzwerken nur über die bestimmte Verkehrsleitung der Dual-Homing-Konfiguration.

2. Das Verfahren gemäß Anspruch 1, worin der Schritt der Errichtung der bidirektionalen Signalisierung zwischen den Peer-Elementen durchgeführt wird durch Sicherstellung einer bidirektionalen virtuellen Verbindung (virtual link, VL) zwischen jedem Paar der Peer-Elemente, und durch Bereitstellung von paarweisem Austausch der Signalisierung-Nachrichten zwischen den Peer-Elementen.

3. Das Verfahren gemäß Anspruch 1 oder 2, worin sowohl das erste als auch das zweite Netzwerk virtuelle private LAN-Dient-Netzwerke (virtual private LAN service, VPLS) sind und worin die Verkehrsleitungen die Form von Spoke Pseudowire-, PW-Verbindungen haben, die zwischen den Netzwerkelementen bereitgestellt sind.

4. Das Verfahren gemäß Anspruch 2, das weiter die Priorisierung der bidirektionalen Signalisierung-Nachrichten gegenüber anderem Verkehr über die VL umfasst.

5. Das Verfahren gemäß Anspruch 1, wobei in Abwesenheit von Fehlern in der Dual-Homing-Konfiguration der Schritt der Auswahl auf der eindeutigen Identifizierung der Peer-Elemente basiert.

6. Das Verfahren gemäß einem beliebigen der Ansprüche 1 bis 5, das einen Schritt der erneuten Auswahl eines anderen der Peer-Elemente und seiner verknüpften Verkehrsleitung als Verkehr weiterleitend umfasst.

7. Ein Softwareprodukt, das maschinenausführbare Anweisungen und / oder Daten zur Durchführung des Verfahrens gemäß einem beliebigen der Ansprüche 1 bis 6 umfasst, gespeichert auf einem geeigneten maschinenlesbaren Speichermedium und geeignet, in einem Netzwerkelement installiert zu werden; wobei das Softwareprodukt ausgebildet ist, um Vorgänge des Verfahrens zu ermöglichen, wenn es in dem Netzwerkelement verwendet wird, das ein Peer-Element (17, 19) in einer vollständig oder teilweise redundanten Dual-Homing-Konfiguration ist, die ein erstes Netzwerk (12) und ein zweites Netzwerk (14) miteinander verbindet.

8. Ein Netzwerkelement (17, 19), das Teil einer vollständig oder teilweise redundanten Dual-Homing-Konfiguration ist, die ein erstes Netzwerk (12) und ein zweites Netzwerk (14) miteinander verbindet und mindestens drei Netzwerkelemente einschließt, wobei zwei von ihnen Peer-Elemente (peer elements, PEs) (17, 19) sind, die zu dem zweiten Netzwerk gehören, wobei mindestens eines ein Kundenelement (customer element, CE) (13) ist, das zu dem ersten Netzwerk gehört, und
mindestens zwei Verkehrsleitungen (20), die jeweils mit den Peer-Elementen verbunden sind und das erste und zweite Netzwerk über die mindestens drei Netzwerkelemente verbinden,
wobei das Netzwerkelement eines der zwei Peer-Elemente, PEs, das ausgebildet ist, um die folgenden Schritte im Zusammenwirken mit einem anderen der zwei Peer-Elemente durchzuführen:
- Errichtung bidirektionaler nicht-xSTP-Signalisierung nur zwischen den zwei Peer-Elementen, die zum zweiten Netzwerk gehören, durch periodischen Austausch von Signalisierung-Nachrichten nur zwischen den Peer-Elementen, PEs, bei gleichzeitiger Einführung, in die Signalisierung-Nachrichten, von Informationen bezüglich des Status der Verkehrsleitungen, die mit entsprechenden Peer-Elementen vernüpft sind, und bezüglich des Status der Peer-Elemente, und zwar durch Vermeidung von Signalisierung-Interaktion zwischen den CE und den PEs und Austausch der Signalisierung-Nachrichten nur zwischen den beiden PEs, mit denen das CE in einem Dual-Homing Verhältnis steht,
- anhand der Informationen, die aus den Signalisierung-Nachrichten gewonnen werden, Entscheiden, an einem der Peer-Elemente zu einer gegebenen Zeit, dass nur seine verknüpfte Verkehrsleitung Verkehr weiterleiten sollte, durch
Auswahl eines der Peer-Elemente als bestimmtes Peer-Element (designated peer element), D-PE, und seiner vernüpften Verkehrsleitung als bestimmt zur Weiterleitung des Verkehrs, bei gleichzeitiger Blockade aller übrigen Verkehrsleitungen gegenüber Senden oder Empfangen von Verkehr auf ihrer CE-PE-Verbindung, wobei die Entscheidung an einem der Peer-Elemente mit Hilfe einer logischen Zustandsmaschine getroffen wird, worin jedes der Peer-Elemente zwei Zustände hat, von denen einer ein bestimmter, Verkehr weiterleitender Zustand (45) ist und der andere ein nicht bestimmter, blockierter Zustand (41) ist, und worin jedes der mindestens zwei Peer-Elemente anhand dieser Information von einem seiner Zustände zum anderen übergehen kann, vorausgesetzt, dass die Informationen in Prioritätsgraden klassifiziert sind,
und Übertragung von Verkehr zwischen den Netzwerken nur über die bestimmte Verkehrsleitung der Dual-Homing-Konfiguration.

## Revendications

1. Procédé d'interconnexion d'un premier réseau (12) et d'un second réseau (14) chacun étant un réseau basé sur "Ethernet" couche 2 ou VPLS, utilisant une configuration à double attachement totalement ou partiellement redondante comportant :
au moins trois éléments de réseau parmi lesquels deux sont des éléments pairs PEs (17, 19) appartenant au second réseau, au moins l'un d'eux est un élément client CE (13) appartenant au premier réseau, et
au moins deux lignes de trafic (20) associées respectivement auxdits éléments pairs PEs et couplant lesdits premier et second réseaux par l'intermédiaire desdits au moins trois éléments de réseau,
le procédé comprend :
l'établissement d'une signalisation bi-directionnelle non xSTP (protocole de transfert de service extensible) uniquement entre lesdits éléments pairs PEs appartenant au second réseau, en échangeant périodiquement des messages de signalisation uniquement entre lesdits éléments pairs PEs, tout en introduisant dans lesdits messages de signalisation des informations se rapportant à l'état des lignes de trafic associées aux éléments pairs respectifs et se rapportant à l'état desdits éléments pairs ; évitant ainsi l'interaction de signalisation entre l'élément CE et les éléments PEs et échangeant les messages de signalisation uniquement entre lesdits deux éléments PEs avec lesquels l'élément CE présente un double attachement ;
sur la base des informations obtenues à partir desdits messages de signalisation, la décision au niveau de l'un desdits éléments pairs à la fois, que seule sa ligne de trafic associée doit pouvoir transmettre un trafic, par
la sélection de l'un des éléments pairs en tant qu'élément pair désigné D-PE et de sa ligne de trafic associée en tant que désignée afin d'assurer la transmission du trafic, tout en bloquant l'ensemble des lignes de trafic restantes, en émission ou réception de trafic, au niveau de leur liaison CE-PE, dans lequel la décision est mise en oeuvre au niveau de l'un desdits éléments pairs en utilisant une machine d'état logique dans laquelle chacun desdits éléments pairs présente deux états, l'un étant un état de transmission de trafic, désigné (45) et l'autre étant un état bloqué, non désigné (41) et dans laquelle chacun desdits au moins deux éléments pairs peut passer de l'un de ces états à l'autre sur la base desdites informations, pourvu que lesdites informations soient classées par degrés de priorité ;
et la transmission du trafic entre lesdits réseaux uniquement par l'intermédiaire de la ligne de trafic désignée de la configuration à double attachement.

2. Procédé selon la revendication 1, dans lequel l'étape d'établissement de ladite signalisation bidirectionnelle entre lesdits éléments pairs est mise en oeuvre en assurant une liaison virtuelle VL bidirectionnelle entre chaque paire desdits éléments pairs, et en exécutant un échange par paire desdits messages de signalisation entre lesdits éléments pairs.

3. Procédé selon la revendication 1 ou 2, dans lequel lesdits premier et second réseaux sont tous les deux des réseaux de service LAN privés virtuels VPLS, et dans lequel lesdites lignes de trafic sont sous la forme de liaisons vocales pseudo câblées assurées entre lesdits éléments de réseau.

4. Procédé selon la revendication 2, comprenant, en outre, le classement par priorité des messages de signalisation bidirectionnelle par rapport à d'autres trafics par l'intermédiaire de ladite liaison virtuelle VL.

5. Procédé selon la revendication 1, dans lequel, en l'absence de défaillance sur la configuration à double attachement, l'étape de sélection est basée sur l'identification non ambiguë desdits éléments pairs.

6. Procédé selon l'une quelconque des revendications 1 à 5, comprenant une étape de re-sélection d'un autre desdits éléments pairs et de sa ligne de trafic associée en tant que ligne de transmission.

7. Produit logiciel, comprenant des instructions et/ou des données pouvant être mises en oeuvre sur ordinateur de manière à exécuter le procédé selon l'une quelconque des revendications 1 à 6 mémorisé sur un support de mémorisation pouvant être lu par ordinateur, approprié et adapté de manière à être installé sur un élément de réseau ; le produit logiciel étant adapté afin de permettre des opérations dudit procédé lorsqu'il est utilisé sur l'élément de réseau formé par un élément pair (17, 19) dans une configuration à double attachement totalement ou partiellement redondante, assurant l'interconnexion d'un premier réseau (12) et d'un second réseau (14).

8. Elément de réseau (17, 19) formant une partie d'une configuration à double attachement totalement ou partiellement redondante assurant l'interconnexion d'un premier réseau (12) et d'un second réseau (14) et comportant au moins trois éléments de réseau parmi lesquels deux sont des éléments pairs PEs (17, 19) appartenant au second réseau, au moins l'un d'eux est un élément client CE (13) appartenant au premier réseau, et
au moins deux lignes de trafic (20) associées respectivement auxdits éléments pairs et couplant lesdits premier et second réseaux par l'intermédiaire desdits au moins trois éléments de réseau,
ledit élément de réseau étant l'un desdits deux éléments pairs PEs, adapté afin de mettre en oeuvre les étapes suivantes en coopération avec un autre des deux éléments pairs :
l'établissement d'une signalisation bi-directionnelle non xSTP uniquement entre lesdits deux éléments pairs appartenant au second réseau, en échangeant périodiquement des messages de signalisation uniquement entre lesdits éléments pairs, tout en introduisant dans lesdits messages de signalisation des informations se rapportant à l'état des lignes de trafic associées aux éléments pairs respectifs et se rapportant à l'état desdits éléments pairs ; évitant ainsi l'interaction de signalisation entre l'élément CE et les éléments PEs et échangeant les messages de signalisation uniquement entre lesdits deux éléments PEs avec lesquels l'élément CE présente un double attachement ;
sur la base des informations obtenues à partir desdits messages de signalisation, la décision au niveau de l'un desdits éléments pairs à la fois, que seule sa ligne de trafic associée doit pouvoir transmettre un trafic, par
la sélection de l'un des éléments pairs en tant qu'élément pair désigné D-PE et de sa ligne de trafic associée en tant que désignée afin d'assurer la transmission du trafic, tout en bloquant l'ensemble des lignes de trafic restantes en émission ou réception de trafic au niveau de leur liaison CE-PE, dans lequel la décision est mise en oeuvre au niveau de l'un desdits éléments pairs en utilisant une machine d'état logique dans laquelle chacun desdits éléments pairs présente deux états, l'un étant un état de transmission de trafic, désigné (45) et l'autre étant un état bloqué, non désigné (41) et dans laquelle chacun desdits au moins deux éléments pairs peut passer de l'un de ses états à l'autre sur la base desdites informations, pourvu que lesdites informations soient classées par degrés de priorité ;
et la transmission du trafic entre lesdits réseaux uniquement par l'intermédiaire de la ligne de trafic désignée de la configuration à double attachement.
